# EUROPÄISCHE PATENTSCHRIFT

(11) **EP 0 939 989 B1**
(45) Veröffentlichungstag und Bekanntmachung des Hinweises auf die Patenterteilung: **12.09.2001**
(21) Anmeldenummer: 97951866.9
(22) Anmeldetag: 06.11.1997
(51) Int. Cl.: H02B 1/30, H02B 1/28

(54) **RAHMENGESTELL FÜR EINEN SCHALTSCHRANK**
RACK FOR A SWITCHING CABINET
BAIE POUR ARMOIRE DE DISTRIBUTION

(30) Priorität: 19.11.1996 DE 19647723
(43) Veröffentlichungstag der Anmeldung: 08.09.1999
(73) Patentinhaber: Rittal-Werk Rudolf Loh GmbH & Co. KG, 35745 Herborn (DE)
(72) Erfinder: KÖHLER, Martina, D-35745 Herborn (DE); REUTER, Wolfgang, D-57299 Burbach 5 (DE)
(74) Vertreter: Fleck, Hermann-Josef, Dr.-Ing.
(86) Internationale Anmeldenummer: EP9706151
(87) Internationale Veröffentlichungsnummer: WO9823009

(56) Entgegenhaltungen:
- WO-A-93/10691
- DE-A- 4 227 532
- DE-C- 4 138 887
- DE-C- 19 506 744
- FR-A- 2 494 954
- US-A- 4 691 970
- PATENT ABSTRACTS OF JAPAN vol. 96, no. 1, 31.Januar 1996 & JP 07 245820 A (MATSUSHITA ELECTRIC WORKS LTD)

## Beschreibung

Die Erfindung betrifft ein Rahmengestell für einen Schaltschrank, das mittels Seitenwänden, mindestens einer Schranktüre und einem Deckel verkleidbar ist und das einen Boden- und einen Deckrahmen hat, die mittels vertikal verlaufender Rahmenprofile verbindbar sind, wobei der Deckrahmen horizontal verlaufende Tiefen- und Breitenstreben aufweist, und wobei die Tiefen- und Breitenstreben mit Ablaufrinnen versehen sind, in denen vom Deckel ablaufendes Wasser sammel- und ableitbar ist.

Ein derartiges Rahmengestell ist aus der EP 0 402 276 bekannt. Der Deckrahmen besteht bei solchen Rahmengestellen aus jeweils zwei Tiefen- und Breitenstreben. Diese sind als Hohlprofilabschnitte ausgebildet, die an ihren Enden rechtwinklig miteinander verbunden sind. Zur Verbindung ist ein Eckverbinderteil vorgesehen, an das die Tiefen- und Breitenstreben angeschraubt werden können. Das Eckverbinderteil hat eine nach außen offene Aufnahme, in die ein zweites Eckverbinderteil eingebracht werden kann. An dem zweiten Eckverbinderteil wird das vertikale Rahmenprofil festgemacht. Die Ablaufrinnen der Tiefen- und Breitenstreben leiten das gesammelte Wasser bis zu den Eckverbinderteilen. Hier verteilt es sich über die einzelnen Eckverbinderteile und läuft dann unkontrolliert an dem vertikalen Rahmenprofil oder den zugeordneten Seitenwänden nach unten ab.

Die beiden Eckverbinderteile müssen sorgfältig gegeneinander und gegen die Tiefen- und Breitenstreben abgedichtet sein, um zu verhindern, daß Wasser in den Innenraum des Schaltschrankes gelangt.

Aus der DE-A 42 27 532, der WO-A 9310691 und der DE-C 195 06 744 sind Schaltschränke mit einem Rahmengestell bekannt, das aus Rahmenschenkeln zusammengesetzt und mittels Seitenwänden, Schranktüre, Deckel und Boden verkleidbar ist. Dabei bilden die Rahmenschenkel des Rahmengestelles keine Außenkanten, sondern in diesen Bereichen im Querschnitt rechteckförmige Freiräume zur Aufnahme der abgekanteten Ränder dieser Verkleidungselemente. Im Bereich des Deckrahmens läuft das vom Deckel abfließende Wasser auf einen horizontalen Profilabschnitt der Rahmenschenkel des Deckrahmens und davon unkontrollierbar auf den darauf stoßenden vertikalen Verkleidungselementen ab, obwohl die Freiräume des horizontalen Deckrahmens an allen vier zugeordneten Enden in die Freiräume der vertikalen Rahmenschenkel übergehen.

Es ist Aufgabe der Erfindung, ein Rahmengestell der eingangs erwähnten Art zu schaffen, das auf einfache Weise einen kontrollierten Abfluß des anfallenden Wassers aus dem Eckbereich des Deckrahmens ermöglicht.

Diese Aufgabe der Erfindung wird erfindungsgemäß dadurch gelöst, daß die Ablaufrinnen benachbarter Tiefen- und Breitenstreben im Eckbereich des Rahmengestelles zusammengeführt und einem Ablaufkanal des vertikalen Rahmenprofiles zugeleitet sind.

Die Ablaufrinnen sind in den Eckbereichen des Deckrahmens zusammengeführt, so daß definierte Ableitstellen für das Wasser geschaffen sind. Die Eckverbindung zwischen den aufeinanderstoßenden Tiefen- und Breitenstreben sowie der vertikalen Rahmenprofile können damit von dem Wasserleitbereich abgetrennt werden. Hierdurch wird eine hohe Betriebssicherheit erreicht, denn die Dichtflächen werden nicht mehr mit Wasser beaufschlagt. Über den Ablaufkanal des vertikalen Rahmenprofils wird das Wasser nach unten abgeleitet.

Nach einer vorteilhaften Ausgestaltung der Erfindung ist vorgesehen, daß die Tiefen- und Breitenstreben einen Dichtsteg tragen, an dem der Deckel dichtend angelegt ist, daß die Dichtstege zu einem umlaufenden Dichtrahmen an den Ecken des Dichtrahmens zusammengeführt sind, und daß sich an die Dichtstege nach unten gerichtete Außenwände anschließen, die die Ablaufrinne tragen. Die Ablaufrinnen der einzelnen Tiefen- und Breitenstreben erstrecken sich über den gesamten Umfang des Deckrahmens. Alleine in den Eckbereichen des Deckrahmens kann eine Ableitung des Wassers zu den vertikalen Rahmenprofilen hin erfolgen.

Eine bevorzugte Erfindungsvariante sieht vor, daß die Ablaufrinnen als streifenförmige Elemente ausgebildet sind, die mit ihrer einen Breitseite an den Tiefen- und Breitenstreben angeschlossen sind, daß die Ablaufrinnen im Eckbereich des Deckrahmens an ihrer Anbindungsstelle an die Tiefen- und Breitenstreben zusammengeführt sind, und daß die Ablaufrinnen an ihren Enden einen Zulauf in den Ablaufkanal bilden. Die Tiefen- und Breitenstreben sind dabei direkt ohne Zwischenschaltung eines Eckverbinderteils aneinandergestoßen. Damit treffen auch die Ablaufrinnen aufeinander. Von hier aus kann die Einleitung in den Ablaufkanal einfach erfolgen.

Der Zulauf in den Ablaufkanal kann einfach derart ausgestaltet sein, daß die aus den streifenförmigen Elementen gebildeten Ablaufrinnen an ihren Stirnseiten im Eckbereich des Deckrahmens mit einem Ausschnitt versehen sind. Die Ausschnitte bilden dabei den Zulauf.

Zur Bildung eines Ablaufkanales kann vorgesehen sein, daß die vertikalen Rahmenprofile an ihrer dem Innenraum des Rahmengestells abgekehrten Außenseite eine profilierte Außenaufnahme aufweisen. Diese Außenaufnahme wird von den Seitenwände bzw. der Schranktür überdeckt. Damit dient die Außenaufnahme als Ablaufkanal, der von außen nicht einsehbar ist. An der Außenaufnahme können auch weiterhin noch Anbauteile, wie beispielsweise Seitenwandbefestigungen, Scharniere oder Verschlußmechanismen angebracht sein.

Der das Rahmengestell abdeckende Deckel kann beispielsweise mit einem umlaufenden, nach unten abgekanteten Rand versehen sein. Dieser leitet das auf dem Deckel gesammelte Wasser in die Ablaufrinnen ein. Er dient somit als Zuführeinrichtung, die sicherstellt, daß das Wasser stets zielgerichtet in die Ablaufrinnen eingeleitet ist.

Eine mögliche Ausgestaltung eines Rahmengestelles ist nach der Erfindung dadurch gekennzeichnet, daß die Seitenwände und/oder die Schranktür einen oberen horizontalen Rand aufweist, der oberhalb der Ablaufrinne und im Abstand zu dieser angeordnet ist. Dieser Rand hat nun zwei Aufgaben. Zum einen verhindert er, daß Verschmutzungen in die Ablaufrinne eindringen. Zum anderen ermöglicht der horizontale Rand einen optischen Abschluß, so daß die Ablaufrinne von außen nicht einsehbar ist.

Wenn der Boden- und der Deckrahmen des Rahmengestells identisch ausgebildet sind, so ist ein geringer Teileaufwand verwirklicht.

Die Erfindung wird im folgenden anhand eines in den Zeichnungen dargestellten Ausführungsbeispiels näher erläutert. Es zeigen:
- Fig. 1: in perspektivischer Seitendarstellung ein aus Rahmenprofilen zusammengesetztes Rahmengestell für einen Schaltschrank und
- Fig. 2: in perspektivischer Teildarstellung einen Eckbereich des Rahmengestelles gemäß Fig. 1 mit angesetzten Verkleidungselementen.

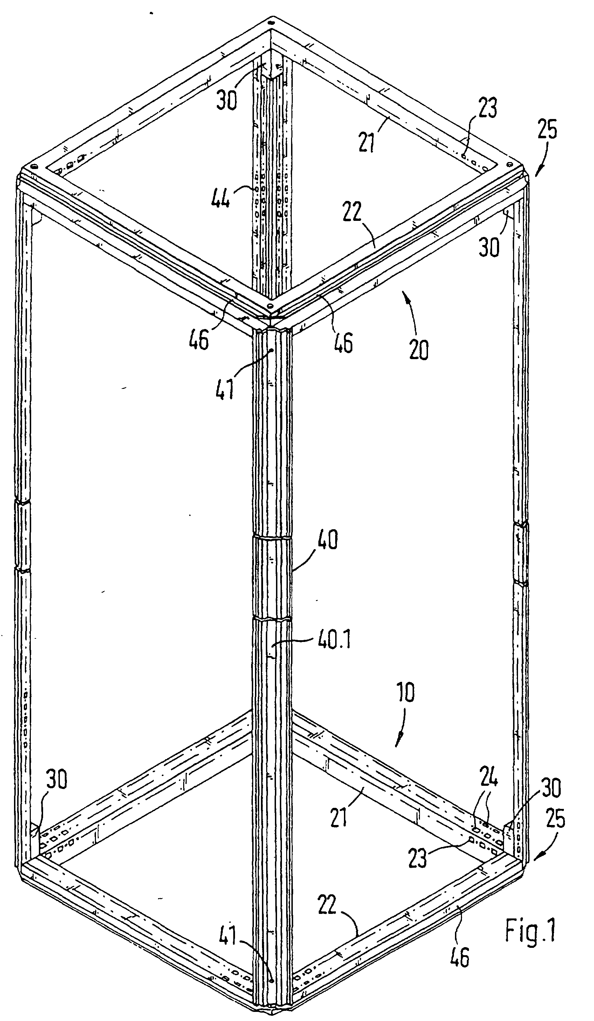

In Fig. 1 ist ein Rahmengestell für einen Schaltschrank gezeigt. Das Rahmengestell ist im wesentlichen aus einem Bodenrahmen 10, einem Deckrahmen 20 und vier vertikalen Rahmenprofilen 40 zusammengesetzt Die vertikalen Rahmenprofile 40 verbinden den Bodenrahmen 10 mit dem Deckrahmen 20. Boden- und Deckrahmen 10 und 20 sind identisch aufgebaut, so daß sie gegeneinander vertauscht werden können.

Der Boden- und der Deckrahmen 10 und 20 weisen jeweils zwei Tiefen- und zwei Breitenstreben 21, 22 auf. Die Tiefen- und Breitenstreben 21, 22 sind an ihren, dem Innenraum des Rahmengestelles zugekehrten Profilseiten mit Reihen von Befestigungsaufnahmen 23, 24 versehen. Auch die vertikalen Rahmenprofile 40 sind mit zum Innenraum des Rahmengestelles gekehrten Befestigungsaufnahmen 44 versehen. An den Befestigungsaufnahmen 23, 24, 44 lassen sich elektrische Einbauten oder Montagehilfen, wie z.B. Montageschienen anbringen.

Die vertikalen Rahmenprofile 40 sind über Verbinder 30 mit dem Boden- bzw. Deckrahmen 10, 20 verbunden. Die Verbinder 30 sind im Bereich von Eckaufnahmen 25 des Boden- bzw. Deckrahmens 10, 20 angeordnet. Die Befestigung der vertikalen Rahmenprofile 40 an dem Verbinder 30 erfolgt beispielsweise mittels einer Verschraubung. Hierzu können die vertikalen Rahmenprofile 40 endseitig mit Schraubaufnahmen 41 versehen sein.

Wie die Darstellung nach Fig. 1 erkennen läßt, weisen die einzelnen Tiefen- und Breitenstreben 21, 22 Ablaufrinnen 46 auf.

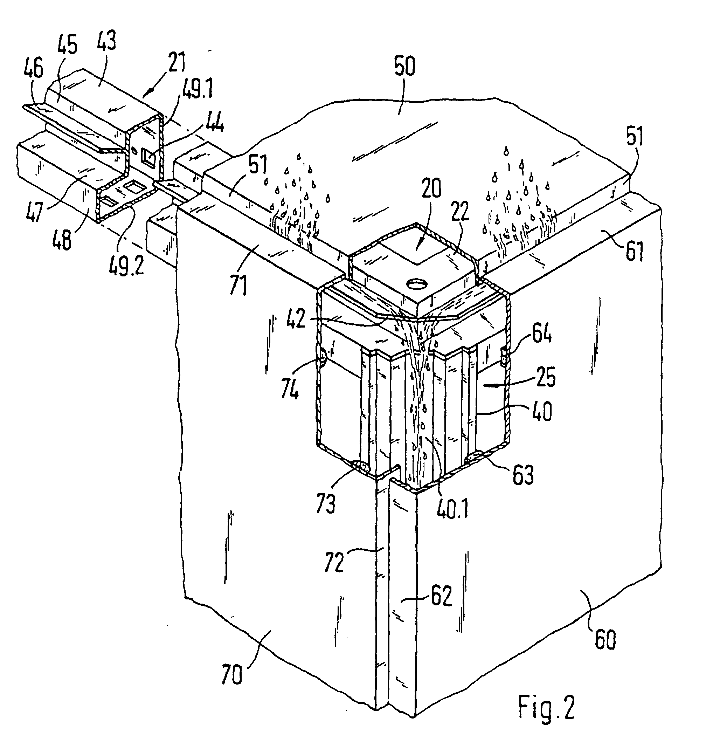

Die Anordnung der Ablaufrinnen 46 wird in der Fig. 2 deutlich. Diese Darstellung zeigt das Rahmengestell gemäß Fig. 1 ausschnittsweise, wobei es mit Seitenwänden 60, 70 und einem Deckel 50 verkleidet ist. Die Tiefen- und Breitenstreben 21, 22 haben einen gleichen Querschnitt. Dem Innenraum des Rahmengestelles zugekehrt sind zwei Innenwände 49.1, 49.2 an den Tiefen- und Breitenstreben 21, 22 angeordnet. Die Innenwände 49.1, 49.2 gehen in Dichtstege 43, 48 über. Die Dichtstege 43, 48 sind rechtwinklig von den Innenwänden 49.1, 49.2 nach außen abgekantet. An die Dichtstege 43, 48 schließen sich zwei Außenwände 45, 47 an. Die Außenwände 45, 47 stehen parallel zu den Innenwänden 49.1, 49.2. An die Außenwand 45 ist einstückig die Ablaufrinne 46 angeschlossen. Die Ablaufrinne 46 wird dabei von einem streifenförmigen Element gebildet, das mit seiner einen Breitseite an die Außenwand 45 angeschlossen ist. Dieses streifenförmige Element verläuft winklig zu der Außenwand 45, so daß sich eine im Querschnitt V-förmige Ablaufrinne 46 ergibt. Die Tiefen- und Breitenstreben 21, 22 sind vorzugsweise als Stanz-Biegeteile ausgebildet. Es ist aber auch möglich, ein Strangpreßprofil zu verwenden.

Wie die Darstellung nach Fig. 2 weiter erkennen läßt, sind die einzelnen Ablaufrinnen 46 im Eckbereich des Deckrahmens 20 zusammengeführt. An ihren stirnseitigen Enden sind sie mit einem Ausschnitt 42 versehen, so daß sich ein gemeinsamer Ablauf ergibt.

Der Deckel 50 ist an seinen Seiten vertikal nach unten abgekantet, so daß sich die Ränder 51 ergeben. In dem an die Ränder 51 anschließenden Bereich ist der Deckel 50 unter Zwischenlage eines Dichtelementes auf den Dichtsteg 43 der Tiefen- und Breitenstreben 21 und 22 aufgesetzt.

Die Seiten des Rahmengestelles sind mit Seitenwänden 60, 70 verkleidet. Anstatt der Seitenwände 60, 70 können aber auch Schranktüren vorgesehen sein. Die Seitenwände 60, 70 sind mit horizontalen und vertikalen Rändern 61, 62 bzw. 71, 72 versehen. Um eine Abdichtung gegenüber dem Deckrahmen 20 zu erreichen, sind Dichtungen 64, 74 vorgesehen. Die Dichtungen 64, 74 sind auf der Innenseite der Seitenwände 60, 70 aufgebracht und liegen an den Dichtstegen 48 der Tiefen- und Breitenstreben 21, 22 an. Die horizontalen Ränder 61, 71 der Seitenwände 60, 70 überdecken die Ablaufrinnen 46.

Lediglich zwischen dem Rand 51 des Deckels 50 und den Rändern 61, 71 ist ein schmaler Spalt belassen. Die vertikalen Ränder 62, 72 der Seitenwände 60, 70 sind zusammengeführt, so daß das vertikale Rahmenprofil 40 nicht einsehbar ist. Die nach außen gekehrte Seite des Rahmenprofiles 40 ist profiliert. Es ergibt sich damit zwischen den Seitenwänden 60, 70 und dem vertikalen Rahmenprofil ein Ablaufkanal 40.1.

Regen- oder Spritzwasser, das sich auf dem Deckel 50 sammelt, wird entlang der Ränder 51 des Deckels 50 in die Ablaufrinne 46 eingeleitet. In dieser Ablaufrinne 46 gelangt das gesammelte Wasser zu den Eckbereichen des Deckrahmens 20. Da in den Eckbereichen die Ausschnitte 42 an den Ablaufrinnen 46 vorgesehen sind, kann das Wasser in den Ablaufkanal 40.1 eingeleitet werden. In diesem Ablaufkanal 40.1 wird das Wasser nach unten abgeleitet. Da die Seitenwände 60, 70 mittels Dichtungen 63, 73 an dem vertikalen Rahmenprofil 40 abgedichtet sind, kann das Wasser nicht in den Innenraum des Schaltschrankes gelangen.

## Patentansprüche

1. Rahmengestell für einen Schaltschrank, das mittels Seitenwänden (60, 70), mindestens einer Schranktüre und einem Deckel(50) verkleidbar ist und das einen Boden- (10) und einen Deckrahmen (20) hat, die mittels vertikal verlaufender Rahmenprofilen (40) verbindbar sind, wobei der Deckrahmen (20) horizontal verlaufende Tiefen- und Breitenstreben (21, 22) aufweist, und wobei die Tiefen- und Breitenstreben (21, 22) mit Ablaufrinnen (46) versehen sind, in denen vom Deckel (50) ablaufendes Wasser sammel- und ableitbar ist,
**dadurch gekennzeichnet,**
**dass** die Ablaufrinnen (46) benachbarter Tiefen- und Breitenstreben (21, 22) im Eckbereich des Rahmengestelles zusammengeführt und einem Ablaufkanal (40.1) des vertikalen Rahmenprofiles (40) zugeleitet sind.

2. Rahmengestell nach Anspruch 1,
**dadurch gekennzeichnet**,
dass die Tiefen- und Breitenstreben (21,22) einen Dichtsteg (43) tragen, an dem der Deckel (50) dichtend angelegt ist,
dass die Dichtstege (43) zu einem umlaufenden Dichtrahmen an den Ecken des Deckrahmens (20) zusammengeführt sind, und
dass sich an die Dichtstege (43) nach unten gerichtete Außenwände (45) anschließen, die die Ablaufrinnen (46) tragen.

3. Rahmengestell nach Anspruch 1 oder 2,
**dadurch gekennzeichnet**,
dass die Ablaufrinnen (46) als streifenförmige Elemente ausgebildet sind, die mit ihrer einen Breitseite an den Tiefen- und Breitenstreben (21,22) angeschlossen sind,
dass die Ablaufrinnen (46) im Eckbereich des Deckrahmens (20) an ihrer Anbindungsstelle an die Tiefen- und Breitenstreben (21,22) zusammengeführt sind, und
dass die Ablaufrinnen (46) an ihren Enden einen Zulauf in den Ablaufkanal (40.1) bilden.

4. Rahmengestell nach Anspruch 3,
**dadurch gekennzeichnet,**
**dass** die aus den streifenförmigen Elementen gebildeten Ablaufrinnen (46) an ihren Stirnseiten im Eckbereich des Deckrahmens (20) mit einem Ausschnitt (42) versehen sind.

5. Rahmengestell nach einem der Ansprüche 1 bis 4,
**dadurch gekennzeichnet,**
**dass** die vertikalen Rahmenprofile (40) an ihrer dem Innenraum des Rahmengestelles abgekehrten Außenseite eine profilierte Außenaufnahme aufweisen, die den Ablaufkanal (40.1) bildet.

6. Rahmengestell nach einem der Ansprüche 1 bis 5,
**dadurch gekennzeichnet,**
**dass** der Deckel (50) einen umlaufenden, nach unten abgekanteten Rand (51) aufweist, der das auf dem Deckel (50) gesammelte Wasser in die Ablaufrinnen (46) einleitet.

7. Rahmengestell nach einem der Ansprüche 1 bis 6,
**dadurch gekennzeichnet,**
**dass** die Seitenwände (60,70) und/oder die Schranktür einen oberen horizontalen Rand (61, 71) aufweist, der oberhalb der Ablaufrinne (46) und im Abstand zu dieser angeordnet ist.

8. Rahmengestell nach einem der Ansprüche 1 bis 7,
**dadurch gekennzeichnet,**
**dass** der Deck- und der Bodenrahmen (20 und 10) des Rahmengestelles identisch ausgebildet sind.

## Claims

1. Framework for a switch cabinet, which can be panelled by means of side walls (60, 70), at least one cabinet door and a cover (50) and which has a base frame (10) and a top frame (20) which can be connected by means of vertically running frame profiles (40), the top frame (20) having horizontally running depth and width struts (21, 22), and the depth and width struts (21, 22) being provided with runoff channels (46) in which water running off from the cover (50) can be collected and directed away, **characterized in that** the runoff channels (46) of adjacent depth and width struts (21, 22) are brought together in the corner region of the framework and are directed to a runoff duct (40.1) of the vertical frame profile (40).

2. Framework according to Claim 1, **characterized in that** the depth and width struts (21, 22) bear a sealing crosspiece (43) on which the cover (50) is positioned with sealing action, in that the sealing crosspieces (43) are brought together at the corners of the top frame (20) to form a peripheral sealing frame, and in that the sealing crosspieces (43) are adjoined by downwardly directed outer walls (45) which bear the runoff channels (46).

3. Framework according to Claim 1 or 2, **characterized in that** the runoff channels (46) are designed as strip-like elements which are connected to the depth and width struts (21, 22) by way of one broad side, in that the runoff channels (46) are brought together in the corner region of the top frame (20) at their point of attachment to the depth and width struts (21, 22), and in that the runoff channels (46) form a feed into the runoff duct (40.1) at their ends.

4. Framework according to Claim 3, **characterized in that** the runoff channels (46), formed from the strip-like elements, are provided with a cutout (42) on their end sides, in the corner region of the top frame (20).

5. Framework according to one of Claims 1 to 4, **characterized in that** on their outer side, directed away from the interior of the framework, the vertical frame profiles (40) have a profiled outer mount, which forms the runoff duct (40.1).

6. Framework according to one of Claims 1 to 5, **characterized in that** the cover (50) has a peripheral, downwardly bent border (51) by means of which the water collected on the cover (50) is directed into the runoff channels (46).

7. Framework according to one of Claims 1 to 6, **characterized in that** the side walls (60, 70) and/or the cabinet door have/has a top horizontal border (61, 71) which is arranged above the runoff channel (46), at a distance from the latter.

8. Framework according to one of Claims 1 to 7, **characterized in that** the top frame and the base frame (20 and 10) of the framework are of identical design.

## Revendications

1. Baie pour une armoire de distribution, qui peut être habillée au moyen de parois latérales (60, 70), d'au moins une porte d'armoire et d'un plafond (50), et qui comporte un cadre de fond (10) et un cadre de plafond (20), qui peuvent être assemblés au moyen de profilés de cadre orientés verticalement (40), dans laquelle le cadre de plafond (20) présente des entretoises de profondeur et de largeur (21, 22) orientées horizontalement, et dans laquelle les entretoises de profondeur et de largeur (21, 22) sont pourvues de rigoles d'écoulement (46), dans lesquelles l'eau s'écoulant du plafond (50) peut être collectée et évacuée, **caractérisée en ce que** les rigoles d'écoulement (46) d'entretoises de profondeur et de largeur (21, 22) voisines sont réunies dans la zone d'angle de la baie et sont conduites à un canal d'écoulement (40.1) du profilé de cadre vertical (40).

2. Baie suivant la revendication 1, **caractérisée en ce que** les entretoises de profondeur et de largeur (21, 22) portent une nervure d'étanchéité (43), sur laquelle le plafond (50) est posé de façon étanche, en ce que les nervures d'étanchéité (43) sont réunies en un cadre d'étanchéité périphérique aux angles du cadre de plafond (20), et en ce que des parois extérieures (45) dirigées vers le bas, qui portent les rigoles d'écoulement (46), se raccordent aux nervures d'étanchéité (43).

3. Baie suivant la revendication 1 ou 2, **caractérisée en ce que** les rigoles d'écoulement (46) sont constituées par des éléments en forme de bandes, qui sont raccordés aux entretoises de profondeur et de largeur (21, 22) par leur première face large, en ce que les rigoles d'écoulement (46) sont, dans la zone d'angle du cadre de plafond (20), réunies à leur point de jonction aux entretoises de profondeur et de largeur (21, 22), et en ce que les rigoles d'écoulement (46) forment à leurs extrémités un chenal d'entrée dans le canal d'écoulement (40.1).

4. Baie suivant la revendication 3, **caractérisée en ce que** les rigoles d'écoulement (46) formées par les éléments en forme de bandes sont pourvues d'une découpe (42) à leurs faces d'extrémité dans la zone d'angle du cadre de plafond (20).

5. Baie suivant l'une quelconque des revendications 1 à 4, **caractérisée en ce que** les profilés de cadre verticaux (40) présentent sur leur face extérieure située à l'opposé de l'espace intérieur de la baie une chambre extérieure profilée, qui forme le canal d'écoulement (40.1).

6. Baie suivant l'une quelconque des revendications 1 à 5, **caractérisée en ce que** le plafond (50) présente un bord périphérique rabattu vers le bas (51), qui conduit l'eau collectée sur le plafond (50) dans les rigoles d'écoulement (46).

7. Baie suivant l'une quelconque des revendications 1 à 6, **caractérisée en ce que** les parois latérales (60, 70) et/ou la porte d'armoire présente(nt) un bord horizontal supérieur (61, 71), qui est disposé au-dessus de la rigole d'écoulement (46) et à distance de celle-ci.

8. Baie suivant l'une quelconque des revendications 1 à 7, **caractérisée en ce que** le cadre de plafond et le cadre de fond (20 et 10) de la baie sont de configuration identique.
